# EUROPÄISCHE PATENTSCHRIFT

(11) **EP 1 347 274 B1**
(45) Veröffentlichungstag und Bekanntmachung des Hinweises auf die Patenterteilung: **03.08.2005**
(21) Anmeldenummer: 02100272.0
(22) Anmeldetag: 18.03.2002
(51) Int. Cl.: G01G 3/18, G01G 3/14

(54) **Modulare Kraftmesszelle für eine Waage und Waage**
Modular force-measuring transducer for a weighing device and weighing device
Transducteur de mesure de force modulaire pour une balance et balance

(43) Veröffentlichungstag der Anmeldung: 24.09.2003
(73) Patentinhaber: Mettler-Toledo GmbH, 8606 Greifensee (CH)
(72) Erfinder: Bucher, Cyrill, 8308, Bassersdorf (CH); Loher, Urs, 8606, Nänikon (CH); Tellenbach, Jean-Maurice, 8442, Hettlingen (CH)

(56) Entgegenhaltungen:
- EP-A- 0 319 176
- EP-A- 0 670 479
- EP-A- 1 069 418
- EP-A- 1 113 249

## Beschreibung

Die Erfindung betrifft eine modulare Kraftmesszelle für eine Waage sowie eine Waage mit modularer Kraftmesszelle nach dem Oberbegriff des Patentanspruchs 1 bzw. 12.

Kraftmesszellen von Waagen sind oft mit einem Kraftaufnehmer versehen, der einerseits mit einem als Abstützung dienenden Waagengehäuse und andererseits mit einem Waagschalenträger verbunden ist, über den die Einleitung der zu messenden Kraft erfolgt. Kraftaufnehmer können auf unterschiedliche Art gestaltet sein. Verbreitet sind Bauweisen mit einem elastischen verformbaren Körper als Kernstück, oder solche mit einer Vorrichtung zur Kraftkompensation, meist mit einer über ein Hebelwerk wirkenden Gegenkraft, die von einem stromgeregelten Elektromagneten erzeugt wird.

So ist zum Beispiel in [1], DE 199 39 633 A1 ein Kraftaufnehmer, der in [2], EP 0 670 479 A1 als "counterforce" oder "force receiver" bezeichnet ist, beschrieben, der einen Verformungskörper aufweist, der ein gehäusefest montierbares Teil des Kraftaufnehmers mit dessen der Krafteinleitung bzw. der Lastaufnahme dienendem Teil verbindet. Zwischen dem Verformungskörper und den mit dem Waagengehäuse und dem Waagschalenträger zu verbindenden Anschlussteilen weist der Kraftaufnehmer normalerweise Einschnitte auf, die der mechanischen Entkopplung des Verformungskörpers dienen, an dem die durch Krafteinwirkungen bewirkte Verformungen mittels Sensoren, vorzugsweise Dehnmessstreifen, gemessen werden.

Der Verformungskörper ist vorzugsweise als Messparallelogramm mit parallelogrammartig geführten Schenkeln ausgebildet (siehe z.B. [3], EP 0 511 521 A1).

Das in der Kraftmesszelle generierte Messsignal, das im vorerwähnten Beispiel mittels der vorzugsweise in einer Brückenschaltung integrierten Dehnmessstreifen gebildet wird, wird oft in einer nachfolgenden Wandlerschaltung digitalisiert und anschliessend weiter verarbeitet. Der Aufbau einer Brückenschaltung mit Dehnmessstreifen ist beispielsweise in [4], U. Tietze, Ch. Schenk, Halbleiterschaltungstechnik, 11. Auflage, 1. Nachdruck, Springer Verlag, Berlin 1999, Seiten 1242-1243 beschrieben.

Die EP 0 319 176 A [6] beschreibt eine Wägevorrichtung mit einem Kraftaufnehmer, einer am Kraftaufnehmer angebrachten Wandlungseinrichtung und einer Schaltungseinrichtung. Diese Einrichtungen sind dicht eingefasst. Die Schaltungseinrichtung kommuniziert über einen Steckeranschluss mit der Elektronik der restlichen Gerätschaft der Wägevorrichtung. Sie schliesst eine Einrichtung zum Erzeugen digitaler Darstellungen von auf den Kraftaunehmer wirkenden Lasten, eine Einrichtung zum Anwenden mindestens einens Korrekturfaktors auf die digitalen Darstellungen und eine Einrichtung zum Abgeben der digitalen Darstellungen ein. Der eingefasste Kraftaufnehmer kann somit als Einheit abgeglichen und in eine Wägevorrichtung eingesetzt werden. Nachteilig an dieser Lösung ist allerdings, dass analoge und digitale Signalverarbeitung unmittelbar beim Kraftaufnehmer platziert sind, was zu schwierig handzuhabenden Temperatureinflüssen als Folge der Abwärme führt und die Kompensation erschwert. Ferner ist die Herstellung aufwändig und bei einem Ungenügen muss die ganze Einheit inklusive der Elektronik ersetzt werden.

Zur Weiterverarbeitung der digitalisierten Messsignale weist die in [2] beschriebene Messzelle ein Speichermodul auf, in dem der Messzelle zugehörige Kompensationsdaten gespeichert sind, mittels derer die Messsignale korrigierbar sind.

Wie in [5], Britische Patentschrift GB 1 462 808, beschrieben, sind dabei insbesondere Fehler zu korrigieren, die durch Nichtlinearitäten, Hystereseeffekte, Temperatureinflüsse und Kriechen verursacht werden. Die dazu notwendigen Abgleichs- oder Kompensationsdaten werden bei der Herstellung im Werk durch eigens dafür vorgesehene Prüf- und Messverfahren gewonnen und im Speichermodul abgelegt (siehe auch [1]).

In der in [2] offenbarten modularen Kraftmesszelle ist der zur Speicherung der Kompensationsdaten dienende Speicherbaustein beabstandet von einer lokalen Schaltungsanordnung fest mit dem Kraftaufnehmer verbunden, so dass vier Komponenten, nämlich die Dehnmessstreifen, ein Temperaturfühler, der Kraftaufnehmer und der Speicherbaustein eine modulare Einheit bilden. Die Kompensationsdaten und Korrekturfaktoren werden dabei insbesondere in Abhängigkeit der Messsignale des Temperaturfühlers gebildet, der ebenfalls fest mit dem Kraftaufnehmer verbunden ist. Entsprechende Verfahren und Bauteile zur Temperaturmessung sind in [4], Seiten 1224-1231 beschrieben.

Der Speicherbaustein ist bei der in [2] beschriebenen modularen Kraftmesszelle mittels eines flexiblen Flachbandkabels mit einer thermisch vom Kraftaufnehmer entkoppelten lokalen Schaltungsanordnung verbunden, auf der ein A/D-Wandler und ein Prozessor vorgesehen sind.

Die Integration der genannten Komponenten in einer modularen Einheit erlaubt eine einfachere Wartung der zugehörigen Waage. Beim Auftreten einer Funktionsstörung kann die modulare Kraftmesszelle von der lokalen Schaltungsanordnung getrennt und ersetzt werden. Ebenso kann die lokale Schaltungsanordnung ersetzt werden, ohne dass die Waage neu abgeglichen und dazu gegebenenfalls ins Werk geschickt werden muss.

Die Montage des Speicherbausteins auf dem Kraftaufnehmer, mit der Verbindung über das flexiblen Flachbandkabels mit der lokalen Schaltungsanordnung, ist jedoch mit einem gewissen Aufwand verbunden. Zudem ist damit zu rechnen, dass der Speicherbaustein den Kraftaufnehmer während des Betriebs thermisch beeinflusst, was bei der Kompensation zu berücksichtigen ist.

Bei modularer Bauweise ist zudem wünschenswert, dass nach dem Einbau einer Messzelle in eine Waage bereits ein optimaler Abgleich derselben vorliegt. Nebst dieser Optimierung besteht weiterhin eine stetige Forderung nach höherer Präzision der Waage und somit nach einer Reduktion von zu korrigierenden Messabweichungen sowie nach einem noch exakteren Abgleich.

Der vorliegenden Erfindung liegt daher die Aufgabe zugrunde, eine verbesserte modulare Kraftmesszelle für eine Waage sowie eine für die Aufnahme der modularen Kraftmesszelle geeignete Waage zu schaffen.

Insbesondere ist eine modulare Kraftmesszelle zu schaffen, welche mit geringerem Aufwand herstellbar und präziser abgleichbar ist. Ferner ist eine mit dieser modularen Kraftmesszelle bestückbare Waage zu schaffen.

Diese Aufgaben werden mit einer modulare Kraftmesszelle und einer Waage gelöst, welche die in Anspruch 1 bzw. 12 angegebenen Merkmale aufweisen. Vorteilhafte Ausgestaltungen der Erfindung sind in weiteren Ansprüchen angegeben.

Die modulare Kraftmesszelle weist einen Kraftaufnehmer auf, der mit Sensoren versehen ist, mittels derer durch Kraft- und Temperatureinwirkungen verursachte Zustandsänderungen des Kraftaufnehmers messbar sind. Ferner ist ein Speichermodul vorgesehen, in dem der modularen Kraftmesszelle zugehörige Kompensationsdaten speicherbar sind. Erfindungsgemäss ist ein Schaltungsmodul mechanisch und durch örtliche Nähe thermisch mit dem Kraftaufnehmer gekoppelt, welches das Speichermodul sowie wenigstens eine Wandlerschaltung aufweist, die zur Wandlung der von den Sensoren abgegebenen analogen Signale dient.

Sofern nur eine einzige Wandlerschaltung vorgesehen ist, kann diese in Zeitabschnitten, in denen keine Kraftmessungen durchgeführt werden, zur Wandlung der von einem Temperaturfühler abgegebenen analogen Signale verwendet werden.

Bevorzugt enthält das Schaltungsmodul nur gerade die Schaltungsteile, welche ihrerseits auf Umwelteinflüsse, insbesondere die Temperatur, aber auch die Feuchtigkeit, empfindlich sind. Es handelt sich dabei vorwiegend um Komponenten der sensornahen, analogen Signalverarbeitung. Deren Abhängigkeit von Umwelteinflüssen, die sich auf die Messsignale auswirken, kann dann ebenso in Rechnung gestellt werden, wie jene für die mechanischen Teile des Kraftaufnehmers. Die Werte der abgespeicherten Kompensationsparameter berücksichtigen diese Abhängigkeiten mit. Es ist denkbar, mehr Schaltungsteile, etwa die weiteren, digitalen Schaltungskomponenten eine Wandlerschaltung, auf dem Modul unter zu bringen, doch besteht für diese keine Notwendigkeit, da deren Signale keiner Kompensation bedürfen und wegen ihrer Wärmeentwicklung eher stören.

Der erfindungsgemässe Aufbau der modularen Kraftmesszelle hat vielfältige Vorteile. Durch die Anordnung des Speichermoduls auf dem Schaltungsmodul entfällt das Aufkleben des Speichermoduls auf den Kraftaufnehmer sowie das Verbinden des Speichermoduls mit dem Schaltungsmodul. Ferner entfällt die lokale Einwirkung der vom Speichermodul erzeugten Wärme auf den Kraftaufnehmer.

Ein präziserer Abgleich der erfindungsgemässen modularen Kraftmesszelle wird erzielt durch
a) Reduktion von Störgrössen, beispielsweise der erwähnten Wärmeeinwirkung des Speichermoduls,
b) Kompensation von Messabweichungen, die durch das zur Verarbeitung analoger Messsignale dienende Schaltungsmodul verursacht werden,
c) Vermeidung von Messabweichungen, die durch Widerstandsänderungen in den Leitungen der durch die Dehnmessstreifen gebildeten Messbrücke verursacht werden, und durch
d) eine präzisere Messung von Korrekturgrössen, nämlich der wirksamen durchschnittlichen Temperatur des Kraftaufnehmers.

Die thermische Kopplung des Schaltungsmoduls mit dem Kraftaufnehmer durch die gegenseitige Nähe führt zu einem Temperaturausgleich zwischen diesen Teilen ohne unerwünschtes lokales Aufheizen des Kraftaufnehmers, so dass durch Massnahmen zur Temperaturkompensation nicht nur diesbezügliche Messabweichungen des Kraftaufnehmers, sondern auch des zur Verarbeitung analoger Signale dienenden Schaltungsmoduls korrigiert werden können, wofür ein einziger Temperaturfühler ausreichend ist. Grundsätzlich sind daher auch günstigere Komponenten, insbesondere Widerstände mit erhöhter Temperaturabhängigkeit, auf dem Schaltungsmodul einsetzbar, wodurch weitere finanzielle Vorteile resultieren.

Nach dem ersten Einbau, aber auch nach dem Austausch einer korrekt vorabgeglichenen, modularen Messzelle in ein Messsystem, insbesondere eine Waage, liegt jeweils eine optimale Abgleichung des gesamten Messsystems bzw. der Waage vor, da die im Speichermodul abgelegten Kompensationsdaten die Nichtidealitäten wie Kriechen, Hysterese, Nichtlinearität usw. des mechanischen Teils des Kraftaufnehmers sowie die Umwelteinflüsse wie Temperatur, Luftdruck, Feuchte, usw. auf den Kraftaufnehmer insgesamt, eingeschlossen des Schaltungsmoduls, berücksichtigen.

Die Wandlerschaltungen arbeiten vorzugsweise nach dem in [4], Seite 1056 beschriebenen Zählverfahren, das mit geringem Schaltungsaufwand realisiert werden kann. Aufgrund des einfachen Schaltungsaufbaus resultiert zudem nur eine geringe Verlustwärme. Vorzugsweise werden von den Wandlerschaltungen zweiwertige pulsweitenmodulierte Signale abgegeben, die einem zur Verarbeitung digitaler Signale vorgesehenen Prozessormodul zuführbar sind. Der für die nach dem Zählverfahren arbeitende Wandlerschaltung vorgesehene Zählerbaustein kann daher im Prozessormodul vorgesehen sein, so dass der Schaltungsaufwand auf dem Schaltungsmodul weiter reduziert wird.

Zur Vermeidung unerwünschter Wärmeeinflüsse sind die zur Verarbeitung digitaler Signale vorgesehenen Module und Komponenten von der Messzelle thermisch weitgehend entkoppelt. Dadurch resultiert nur eine geringe Erwärmung des mit dem Kraftaufnehmer gekoppelten Schaltungsmoduls und somit auch ein relativ kleiner Wärmegradient über dem Kraftaufnehmer.

Das Schaltungsmodul kann ein flexibles oder festes mit Leiterbahnen versehenes Substrat, beispielsweise eine Schaltplatine, aufweisen, über das der Temperaturausgleich zwischen dem Schaltungsmodul und dem Kraftaufnehmer erfolgt. Zur Gewährleistung eines optimalen Wärmetransfers und der Abschirmung elektromagnetischer Felder ist vorzugsweise ein zumindest teilweise am Substrat des Schaltungsmoduls anliegendes, mit dem Kraftaufnehmer lösbar verbundenes, vorzugsweise verschraubbares Metallelement vorgesehen, mit dem das Schaltungsmodul mittels Schnappvorrichtungen, Klemmen, Schrauben oder ähnlicher Mittel verbindbar ist.

Der Verformungskörper des Kraftaufnehmers ist beispielsweise als Messparallelogramm ausgebildet und an den Verformungszonen bzw. Dünnstellen mit Dehnmessstreifen versehen, die vorzugsweise mittels wenigstens zwei getrennt geführter flexibler, bandartiger Verbindungen mit dem Schaltungsmodul verbunden und dort zu einer Messbrücke zusammengeschaltet sind. Die Abmessungen der vorzugsweise auf ein flexibles Band gedruckten Leiterbahnen zu den Dehnmessstreifen, beispielsweise piezoresistiven Widerständen, sind derart ausgestaltet, dass alle, gegebenenfalls aus Teilabschnitten bestehenden Verbindungsleitungen von den Knotenpunkten der Messbrücke zu den Anschlüssen der Dehnmessstreifen zumindest annähernd denselben Widerstandswert aufweisen. Durch Temperatureinflüsse in den Verbindungsleitungen der Brückenschaltung bewirkte Widerstandsänderungen kompensieren sich daher gegenseitig, so dass die Messbrücke, sofern keine Last auf den Kraftaufnehmer einwirkt, auch nach während des Betriebs auftretender Temperaturänderungen im Gleichgewicht ist. Vorzugsweise werden die Leiterbahnen, welche die Verbindungsleitungen der Messbrücke bilden, mit dem Kraftaufnehmer zudem thermisch gekoppelt, so dass diese Leiterbahnen bei auftretenden Temperaturverschiebungen jeweils gleiche Widerstandsänderungen erfahren.

Teilabschnitte der zu den Dehnmessstreifen führenden Leiterbahnen können bereits vor dem Anschluss an das Schaltungsmodul zu einem Knotenpunkt der Messbrücke zusammengeführt werden, so dass sich die Anzahl der notwendigen Anschlüsse auf dem Schaltungsmodul reduziert.

Das Schaltungsmodul wird vorzugsweise am gehäusefest montierten Teil des Kraftaufnehmers montiert, weshalb während des Betriebs der Waage über dem Kraftaufnehmer ein in Längsrichtung verlaufender Temperaturgradient entstehen kann. Zur optimalen Bestimmung der für das Verhalten des Kraftaufnehmers relevanten Temperatur wird ein als Temperaturfühler dienender Sensor daher vorzugsweise an einer Stelle angeordnet, wo ein Mittelwert der für die Sensoren massgebenden Temperatur herrscht, im beispielsweise angeführten als Messparallelogramm gestalteten Verformungskörper in der Mitte eines horizontal verlaufenden Schenkels.

Nachfolgend wird die Erfindung anhand von Zeichnungen am Beispiel einer Kraftmesszelle mit einem als Messparallelogramm ausgeführten Verformungskörper mit Dehnmessstreifen als Sensoren näher erläutert. Dieses Beispiel ist aber nicht einschränkend zu verstehen. Die Erfindung lässt sich auch an anderen Typen von Kraftmesszellen einsetzen. Es zeigen:
- Figur 1: eine mit einem Waagschalenträger 4 und einem Befestigungsteil 3 verschraubte, modulare Kraftmesszelle 2, die aus einem mit Sensoren 28, 29 versehenen Kraftaufnehmer 20 und einem Schaltungsmodul 24 besteht,
- Figur 2: eine Seitenansicht der modularen Kraftmesszelle 2 von Figur 1,
- Figur 3: den Kraftaufnehmer 20 der modularen Kraftmesszelle 2 von Figur 1 mit Schrauben 36, 46, 231 zur Befestigung des mit einem Waagengehäuse 5 verbindbaren Befestigungsteils 3, des Waagschalenträgers 4 und eines Metallelements 23, welches zum Halten des Schaltungsmoduls 24 dient,
- Figur 4: die modulare Kraftmesszelle 2 von oben mit zwei Anschlussleitungen 22_{T}, 22_{B}, mittels derer das Schaltungsmodul 24 mit den Sensoren 28, 29 verbunden ist,
- Figur 5: den modularen Aufbau eines bevorzugten Schaltungsmoduls 24, das mittels der Anschlussleitungen 22_{T}, 22_{T'}, 22_{B} mit den Sensoren 28, 29 sowie über eine weitere Anschlussleitung 500 mit einem Prozessormodul 501 verbunden ist und
- Figur 6: vorzugsweise Ausgestaltungen von zur Wandlung analoger Sensorsignale dienender, auf dem Schaltungsmodul 24 angeordneter Wandlerschaltungen 243, 244.

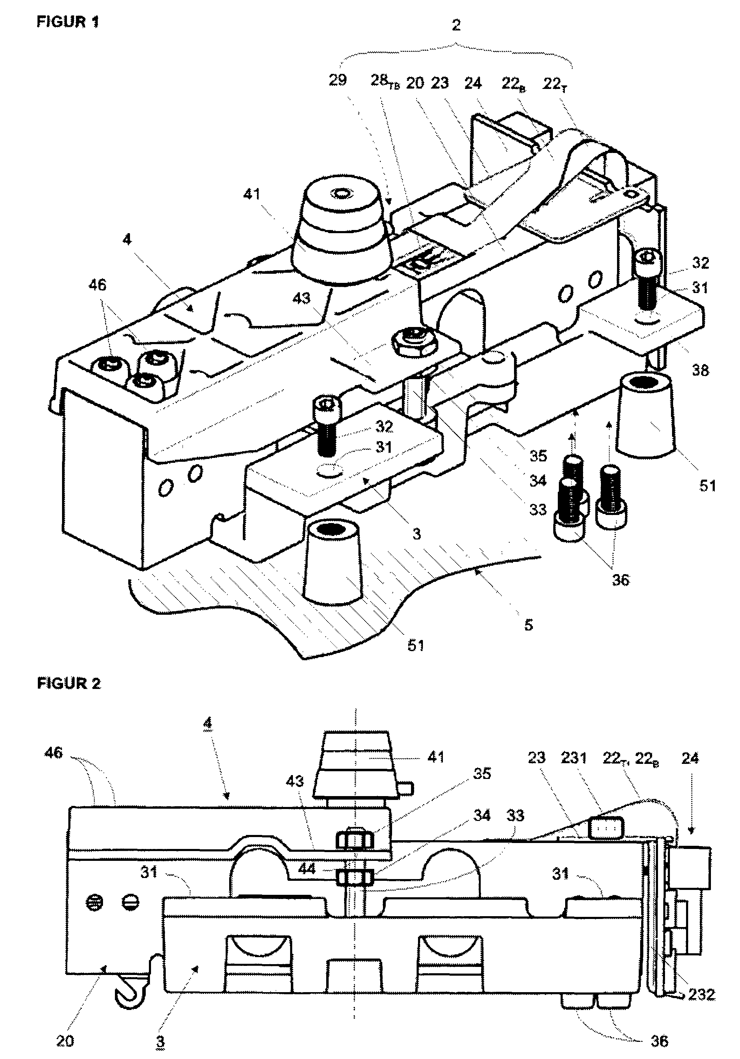

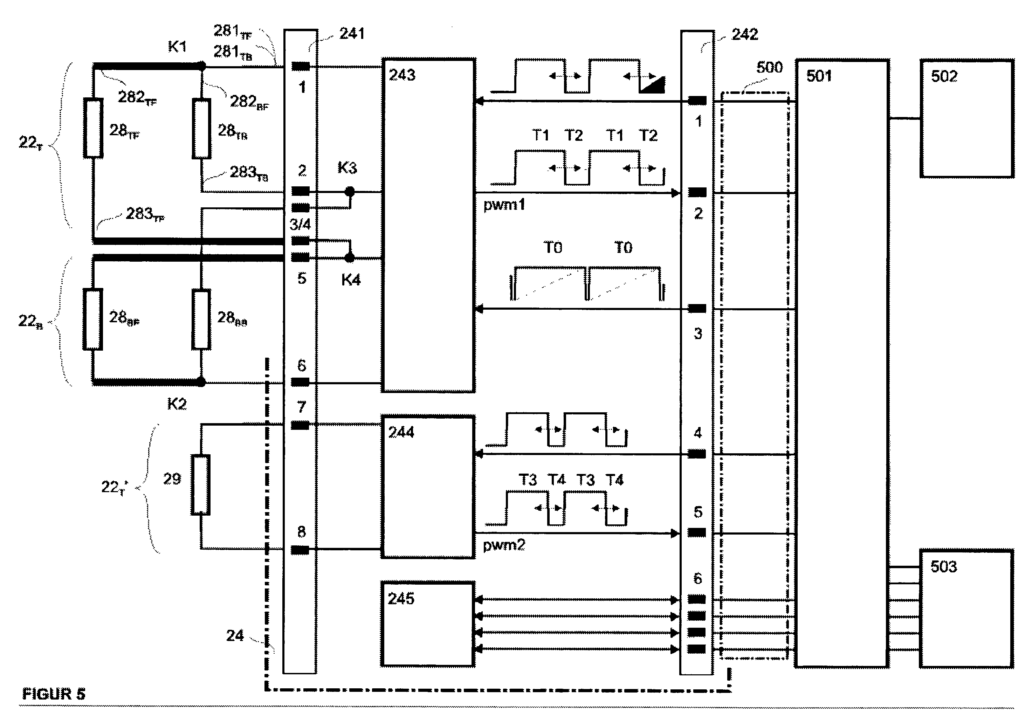

Figur 1 und Figur 2 zeigen eine mittels Schrauben 36, 46 mit einem Waagschalenträger 4 und einem Befestigungsteil 3 verbundene erfindungsgemässe modulare Kraftmesszelle 2, die aus einem mit Sensoren 28, 29 versehenen Kraftaufnehmer 20 und einem Schaltungsmodul 24 besteht, welches ein zur Aufnahme von Kompensationsdaten dienendes Speichermodul 245 und wenigstens eine zur Wandlung analoger Messsignale dienende Schaltungsanordnung 243, 244 aufweist (siehe auch Figur 5).

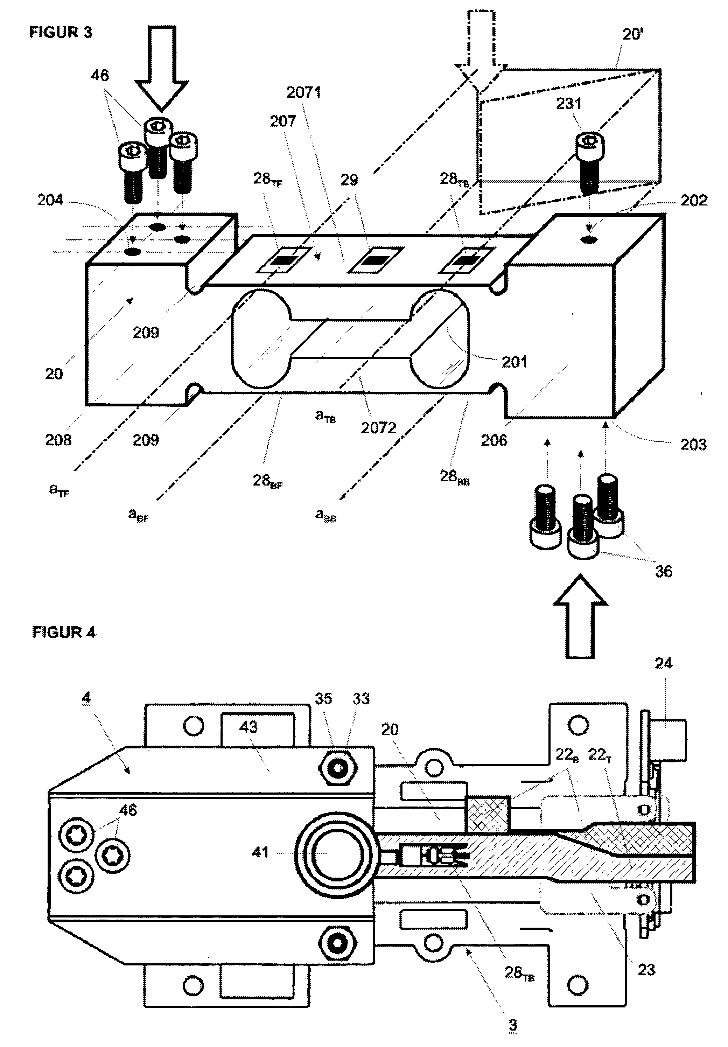

Der in Figur 3 in einer vorzugsweisen Ausgestaltung gezeigte Kraftaufnehmer 20 weist einen Verformungskörper 207 auf, der als Messparallelogramm (siehe Figur 3, 20') mit parallelogrammartig geführten Schenkeln 2071, 2072 ausgebildet ist. Der Verformungskörper 207 verbindet ein gehäusefest montierbares Teil 206 des Kraftaufnehmers 20 mit dessen der Krafteinleitung bzw. der Lastaufnahme dienendem Teil 208. Zur Entkopplung des Verformungskörpers 207 sind angrenzend an das mit dem Befestigungsteil 3 und das mit dem Waagschalenträger 4 zu verbindende Teil 206 bzw. 208 Einschnitte 209 vorgesehen. An den Stellen, welche virtuell die Ecken des Messparallelogramms bilden, weist der Verformungskörper 207 mit Dehnmessstreifen 28_{TF}, 28_{TB}, 28_{BF}, 28_{BB} versehene Dünnstellen auf, durch die senkrecht zum Messparallelogramm stehende Biegeachsen a_{TF}, a_{TB}, a_{BF}, a_{BB} verlaufen.

In der Mitte des oberen Schenkels 2071 des Verformungskörpers 207 ist zudem ein für die Temperaturkompensation benötigter Temperaturfühler 29 angeordnet, der aufgrund des in dieser Anordnung in Längsrichtung verlaufenden Temperaturgradienten einen mittleren Wert der Temperaturen innerhalb des Verformungskörpers 207 misst, wodurch eine präzisere Korrektur von durch Temperaturschwankungen verursachten Messabweichungen möglich wird.

Die Dehnmessstreifen 28_{TF}, 28_{TB}, 28_{BF}, 28_{BB} sind mittels zwei getrennt voneinander geführter, flexibler bandartiger Verbindungen 22_{T}, 22_{B}, vorzugsweise mit Leiterbahnen bedruckter Folien, mit dem Schaltungsmodul 24 verbunden, das von einem mittels einer Schraube 231 mit dem Kraftaufnehmer 20 verbundenen winkelförmigen Metallelement 23 derart gehalten ist, dass ein guter Wärmeaustausch zwischen dem Schaltungsmodul 24 und dem Kraftaufnehmer 20 resultiert. Dazu weist das Metallelement 23 ein plattenförmiges Teil 232 auf, das am Substrat des Schaltungsmoduls 24 anliegt, welches beispielsweise eine bestückte Schaltplatine ist.

Auf eine vorzugsweise Ausgestaltung der beiden flexiblen, bandartigen Verbindungen 22_{T}, 22_{B} (siehe Figur 4), von denen eines die auf der Oberseite und das andere die auf der Unterseite des Verformungskörpers 207 angeordneten Dehnmessstreifen 28_{TF}, 28_{TB} bzw. 28_{BF}, 28_{BB} mit dem Schaltungsmodul 24 verbindet, wird in einem späteren Abschnitt eingegangen.

Die Vorteile der erfindungsgemässen modularen Kraftmesszelle 2 wurden oben bereits beschrieben. Im Gegensatz zur Lösung von [2] kann das Speichermodul 245 (siehe Figur 5) direkt auf dem Schaltungsmodul 24 platziert werden, wodurch die Montage direkt auf dem Kraftaufnehmer sowie eine zusätzliche Verbindungsleitung entfallen. Wie nachstehend noch im Detail beschrieben wird, können aufgrund der thermischen Kopplung des Schaltungsmoduls 24 und des Kraftaufnehmers 20 nicht nur durch den Kraftaufnehmer 20, sondern auch durch das Schaltungsmodul 24 verursachte Messabweichungen basierend auf einer einzigen Temperaturmessung kompensiert werden. Die erfindungsgemässe modulare Kraftmesszelle 2 kann daher, nach dem Abgleich im Werk in neu produzierte Waagen oder als Ersatz einer defekten Messzelle vor Ort in die Waage eines Anwenders eingebaut werden, ohne dass weitere Justierungen der Waage notwendig sind. Durch die Mitkompensation der vom Schaltungsmodul 24 verursachten Messabweichungen ergibt sich in beiden Fällen eine optimale Präzision der Waage.

Figur 5 zeigt in einer vorzugsweisen Ausgestaltung den modularen Aufbau eines Schaltungsmoduls 24, das über Anschlussleisten 241, 242 und Anschlussleitungen 22_{T}, 22_{T'}, 22_{B} bzw. 500 einerseits mit den Dehnmessstreifen 28_{TF}, 28_{TB}, 28_{BF}, 28_{BB} sowie einem Temperaturfühler 29 und andererseits mit einem Prozessormodul 501 verbunden ist, an das eine Anzeige 502 und ein Schnittstellenmodul 503 angeschlossen sind. Das Prozessormodul 501 ist innerhalb der Waage getrennt vom Schaltungsmodul 24 angeordnet und von diesem daher thermisch gut entkoppelt. Die vom Prozessormodul 501 erzeugte Verlustwärme bleibt daher ohne nennenswerten Einfluss auf die erfindungsgemässe modulare Kraftmesszelle 2.

Das Schaltungsmodul 24 weist zwei Wandlerschaltungen 243, 244 auf. Mittels der ersten Wandlerschaltung 243 werden die von den Dehnmessstreifen 28_{TF}, 28_{TB}, 28_{BF}, 28_{BB} abgegebenen analogen Signale und mittels der zweiten Wandlerschaltung 244 werden die vom Temperaturfühler 29 abgegebenen analogen Signale in zweiwertige pulsweitenmodulierte Signale pwm1, pwm2 gewandelt, über die Verbindungsleitung 500 zum Prozessormodul 501 übertragen und von diesem weiter verarbeitet. Vorzugsweise nach der Inbetriebsetzung der Waage werden vom Prozessormodul 501 dazu die Kompensationsdaten aus dem Speichermodul 245 abgerufen, wonach Messabweichungen korrigierbar sind.

Figur 5 zeigt ferner eine vorzugsweise Ausgestaltung der flexiblen, bandartigen Verbindungen 22_{T}, 22_{B}, von denen eine die auf der Oberseite und die andere die auf der Unterseite des Verformungskörpers 207 angeordneten und zu einer Messbrücke zusammengeschalteten Dehnmessstreifen 28_{TF}, 28_{TB} bzw. 28_{BF}, 28_{BB} mit dem Schaltungsmodul 24 verbindet.

Die Abmessungen der vorzugsweise auf ein flexibles Band 22_{T}, 22_{B} gedruckten Leiterbahnen sind derart ausgestaltet, dass alle, gegebenenfalls aus Teilabschnitten 281_{TF}, 282_{TF}, 283_{TF}; 281_{TB}, 282_{BF}, 283_{TB}; ... bestehenden Verbindungsleitungen von den Knotenpunkten der Messbrücke zu den Anschlüssen der Dehnmessstreifen 28_{TF}, 28_{TB}, 28_{BF}, 28_{BB} zumindest annähernd denselben Widerstandswert aufweisen.

Dies ist von Bedeutung, da die Dehnmessstreifen 28_{TF}, 28_{BF} weiter vom Schaltungsmodul 24 entfernt sind, als die Dehnmessstreifen 28_{BF}, 28_{BB}, so dass dafür längere Verbindungsleitungen benötigt werden. Zur Kompensation des dadurch entstehenden zusätzlichen Leitungswiderstandes werden diese Leitungen daher vorzugsweise mit einem entsprechend höheren Leitungsquerschnitt ausgebildet. Durch Temperatureinflüsse in den Verbindungsleitungen der Brückenschaltung bewirkte Widerstandsänderungen kompensieren sich daher gegenseitig, so dass die Messbrücke - so lange der Kraftaufnehmer keine Laständerung erfährt - auch nach beliebigen während des Betriebs auftretenden Temperaturänderungen im Gleichgewicht bzw. im gleichbleibenden Ungleichgewicht ist.

In der in Figur 5 gezeigten Schaltungsanordnung sind bei jedem flexiblen Band 22_{T}; 22_{B} je zwei gedruckte Leiterbahnen zu einem Knotenpunkt K1; K2 zusammengeführt, wodurch anstelle von acht Anschlusskontakten nur sechs Anschlusskontakte 241-1, 241-2, 241-3, 241-4, 241-5, 241-6 auf dem Schaltungsmodul 24 benötigt werden. Der Einfachheit halber sind zwei vollständig getrennte flexible Bänder vorgesehen 22_{T}; 22_{B}, von denen je zwei Leiterbahnen über separate Anschlusskontakte 241-2, 241-3, 241-4, 241-5 ins Schaltungsmodul 24 geführt und erst dort zu je einem Knoten K3, K4 verbunden werden.

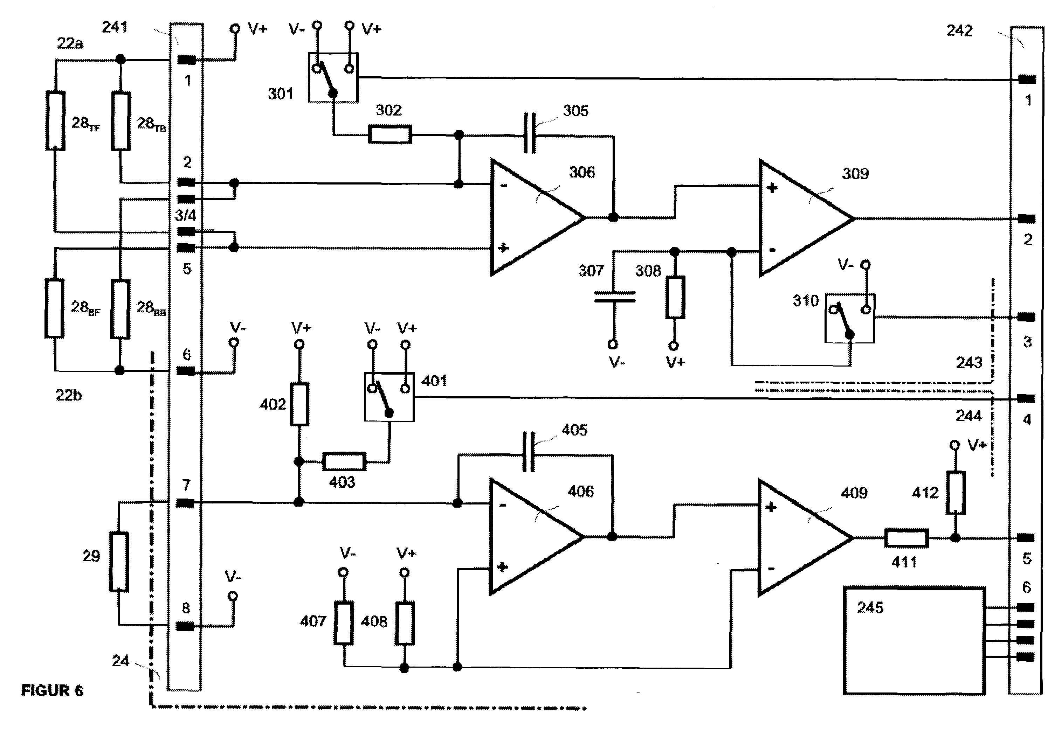

Figur 6 zeigt vorzugsweise Ausgestaltungen von zur Wandlung analoger Sensorsignale dienender, auf dem Schaltungsmodul 24 angeordneter Wandlerschaltungen 243, 244, die nach dem Zählverfahren arbeiten, das in [4], Seiten 1056-162 beschrieben ist.

Durch Umschalten eines Schalters 301 bzw. 401 wird bewirkt, dass die Ladungen, die einem Kondensator 305 bzw. 405 in einem ersten Zeitabschnitt zugeführt und in einem zweiten Zeitabschnitt wieder entnommen werden, balanciert werden (Charge Balancing Verfahren). Die Ladungszufuhr und Entnahme ist natürlich vom Eingangssignal bzw. von der Messgrösse abhängig, so dass sich die Zeitabschnitte, in denen der Kondensator 305 bzw. 405 geladen und entladen wird, dementsprechend ändern. Sofern der Kondensator 305 bzw. 405 während eines ersten Zeitabschnitts mittels des Eingangssignals geladen wird, ist die Länge des Zeitabschnitts, innerhalb dem der Kondensator wieder entladen wird, ein Mass für die Grösse des Eingangssignals. Das resultierende pulsweitenmodulierte Signal kann daher einem Zähler zugeführt werden, der vorzugsweise im Prozessormodul 501 integriert ist.

Die Wandlerschaltungen 243 und 244 können daher mit wenigen Bauteilen aufgebaut werden. Die Eingangssignale werden je einem mittels der Kondensatoren 305, 405 als Integrator beschalteten Operationsverstärker 306 bzw. 406 zugeführt, dem ein Komparator 309 bzw. 409 nachgeschaltet ist.

Im Komparator 309 der ersten Wandlerschaltung 243 wird das Ausgangssignal des Operationsverstärkers 305 mit einer in etwa rampenförmig verlaufenden Spannung verglichen, die mittels eines Kondensators 307, Widerstandes 308 und eines periodisch betätigten Schalters 310 erzeugt wird. In der ersten Wandlerschaltung 243 wird das Ausgangssignal des Operationsverstärkers 305 daher auf einen zum Eingangssignal bzw. zu der auf den Kraftaufnehmer 20 einwirkenden Kraft korrespondierenden Wert geführt.

Im Komparator 409 der zweiten Wandlerschaltung 244 wird das Ausgangssignal des Operationsverstärkers 405 hingegen mit einer mittels eines Spannungsteilers 407, 408 gebildeten, konstanten Spannung verglichen. Innerhalb eines ersten Zeitabschnitts T3 läuft die Ausgangsspannung des Operationsverstärkers 405, bei entsprechender Polarität des Eingangssignals, rampenförmig hoch und nach dem Erreichen der vom Spannungsteiler 407, 408 gebildeten Spannung und dem Umschalten des Schalters 401 wieder rampenförmig nach unten. Der Umschaltzeitpunkt ist daher ein Mass für die Grösse des Eingangssignals und somit der vom Messfühler 29 gemessenen Temperatur. Die zweite Wandlerschaltung 244 verwendet daher ein dem in [4], Seite 1059 beschriebenen Zwei-Rampen-Verfahren (Dual Slope) ähnliches Verfahren. Grundsätzlich sind natürlich verschiedenartige Verfahren und Schaltungsanordnungen einsetzbar.

Aus Figur 6 ist somit ersichtlich, dass die Wandlerschaltungen 243, 244 einfach aufgebaut sind, wodurch der auf den Kraftaufnehmer 20 einwirkende Einfluss der Verlustwärme der Komponenten des Schaltungsmoduls 24 relativ gering ist.

Der Einbau der erfindungsgemässen modularen Messzelle 2 in eine Waage erfolgt, wie in Figur 1 gezeigt, vorzugsweise mittels eines U-profilförmigen, mit Flügelelementen 33 versehenen Befestigungsteils 3, mit dem das gehäusefest montierbare Teil 206 des Kraftaufnehmers 20 mittels Schrauben 36 verschraubt wird. Die Flügelelemente 38 des Befestigungsteils 3 sind mit Bohrungen 31 versehen durch die Schrauben 32 führbar sind, mittels derer das Befestigungsteil 3 mit innerhalb des Waagengehäuses 5 entsprechend vorgesehenen, Gewindeeinsätze aufweisenden Stützelementen 51 verschraubt werden kann. Die Stützelemente 51 sind vorzugsweise aus einem isolierenden Material gefertigt, so dass die Messzelle 2 vom Waagengehäuse 5 und weiteren darin vorgesehenen Modulen, beispielsweise dem Prozessormodul 51, thermisch entkoppelt ist.

Das der Krafteinleitung bzw. der Lastaufnahme dienende Teil 208 des Kraftaufnehmers 20 ist mittels Schrauben 46 mit einem Waagschalenträger 4 verschraubt, der einen Waagschalenaufnahmekonus 41 aufweist.

Aus Figur 2 ist ferner ersichtlich, dass ein Seitenteil 43 des Waagschalenträgers 4 mit einer Bohrung 44 versehen ist, durch die ein mit einem Gewinde versehener und mit dem Befestigungsteil 3 verbundener Bolzen 33 geführt ist. Der Bolzen 33 ist mit zwei Schraubenmuttern 34, 35 versehen, die derart justierbar sind, dass die Auslenkung des Waagschalenträgers 4 bzw. des Seitenteils 43 nach unten und nach oben beschränkt ist, wodurch eine Überlastung der modularen Messzelle durch Zug oder Druck verhindert wird.

Literaturverzeichnis:
[1] Deutsche Offenlegungsschrift DE 199 39 633 A1
[2] Europäische Patentanmeldung EP 0 670 479 A1
[3] Europäische Patentanmeldung EP 0 511 521 A1
[4] U. Tietze, Ch. Schenk, Halbleiterschaltungstechnik, 11. Auflage, 1. Nachdruck, Springer Verlag, Berlin 1999
[5] Britische Patentschrift GB 1 462 808
[6] Europäische Patentanmeldung EP 0 319 176 A2

## Patentansprüche

1. Modulare Kraftmesszelle (2), insbesondere für eine Waage, mit einem Kraftaufnehmer (20), der mit Sensoren (28, 29) versehen ist, mittels derer durch Kraft- und Temperatureinwirkungen verursachte Zustandsänderungen des Kraftaufnehmers (20) messbar sind, und mit einem Speichermodul (245), in dem der modularen Kraftmesszelle (2) zugehörige Kompensationsdaten speicherbar sind, **dadurch gekennzeichnet, dass** ein Schaltungsmodul (24) mechanisch und thermisch mit dem Kraftaufnehmer (20) gekoppelt ist, welches das Speichermodul (245), wenigstens eine zur Wandlung der von den Sensoren (28, 29) abgegebenen analogen Signale dienende Wandlerschaltung (243, 244) und eine Anschlusstelle (242) aufweist, über die das Speichermodul (245) und die Wandlerschaltung (243, 244) je separat mit einem Prozessormodul (501) verbindbar sind.

2. Modulare Kraftmesszelle (2) nach Anspruch 1, **dadurch gekennzeichnet, dass** das Schaltungsmodul neben dem Speichermodul im wesentlichen nur Schaltungsteile für eine sensornahe, analoge Signalverarbeitung enthält.

3. Modulare Kraftmesszelle (2) nach Anspruch 1 oder 2, **dadurch gekennzeichnet, dass** zwei Wandlerschaltungen (243, 244) zur Abgabe digitaler, gegebenenfalls pulsweitenmodulierter Signale pwm1, pwm2 vorgesehen sind, die zu den von den Sensoren (28, 29) abgegebenen analogen Signale bzw. zu der dem Kraftaufnehmer (20) zugeführten Kraft und dessen Temperatur korrespondieren.

4. Modulare Kraftmesszelle (2) nach Anspruch 1, 2 oder 3, **dadurch gekennzeichnet, dass** das Schaltungsmodul (24) über eine Verbindungsleitung (500) mit einem von der Kraftmesszelle (2) abgesetzten, mit dieser thermisch gut entkoppelten Prozessormodul (501) verbindbar ist, welches zum Auslesen der Kompensationsdaten aus dem Speichermodul (245) und zur entsprechenden Verarbeitung der von der wenigstens einen Wandlerschaltung (243, 244) abgegebenen digitalen Signale geeignet ist.

5. Modulare Kraftmesszelle (2) nach einem der Ansprüche 1 bis 4, **dadurch gekennzeichnet, dass** das Schaltungsmodul (24) ein flexibles oder festes, mit Leiterbahnen versehenes Substrat, gegebenenfalls eine Schaltplatine, aufweist.

6. Modulare Kraftmesszelle (2) nach Anspruch 5, **dadurch gekennzeichnet, dass** ein zumindest teilweise am Substrat des Schaltungsmoduls (24) anliegendes, mit dem Kraftaufnehmer (20) in lösbarer Verbindung stehendes Metallelement (23) vorgesehen ist, mit dem das Schaltungsmodul (24) verbindbar ist.

7. Modulare Kraftmesszelle (2) nach einem der vorstehenden Ansprüche, **dadurch gekennzeichnet, dass** der Kraftaufnehmer (20) einen gegebenenfalls als Messparallelogramm ausgestalteten Verformungskörper (207) aufweist, an dessen Verformungszonen mindestens ein, vorzugsweise vier als Dehnmessstreifen ausgestaltete Sensoren (28_{TF}, 28_{TB,} 28_{BF}, 28_{BB}) und mittels wenigstens einer flexiblen, bandartigen Verbindung (22_{T}, 22_{B}) mit dem Schaltungsmodul (24) verbunden und dort zu einer Messanordnung, vorzugsweise eine Messbrücke zusammengeschaltet sind.

8. Modulare Kraftmesszelle (2) nach Anspruch 7, **dadurch gekennzeichnet, dass** die Abmessungen der vorzugsweise auf ein flexibles Band oder eine Folie gedruckten Leiterbahnen der flexiblen, bandartigen Verbindung (22_{T}, 22_{B}), die zu den Sensoren (28_{TF}, 28_{TB}, 28_{BF}, 28_{BB}) führen, derart ausgestaltet sind, dass alle, gegebenenfalls aus Teilabschnitten (281_{TF}, 282_{TF}, 283_{TF}; 281_{TB}, 282_{BF}, 283_{TB}; ...) bestehenden Verbindungsleitungen zu den Anschlüssen der Sensoren (28_{TF}, 28_{TB}, 28_{BF}, 28_{BB}) zumindest annähernd denselben Widerstandswert aufweisen.

9. Modulare Kraftmesszelle (2) nach Anspruch 7 oder 8, **dadurch gekennzeichnet, dass** die Sensoren (28_{TF}, 28_{TB}, 28_{BF}, 28_{BB}) mittels wenigstens zwei getrennt geführter flexibler, bandartiger Verbindungen (22_{T}, 22_{B}) mit dem Schaltungsmodul (24) verbunden sind.

10. Modulare Kraftmesszelle (2) nach Anspruch 7 oder 8, **dadurch gekennzeichnet, dass**, zur Verminderung der Anzahl der Anschlüsse (241-1, 241-2, ...) auf dem Schaltungsmodul (24) Teilabschnitte (281_{TF}, 281_{TB}; 281_{BF}, 281_{BB}) der Leiterbahnen zu den Sensoren (28_{TF}, 28_{TB}, 28_{BF}, 28_{BB}) durch zwei oder mehrere der Sensoren (28_{TF}, 28_{TB}, 28_{BF}, 28_{BB}) gemeinsam genutzt sind.

11. Modulare Kraftmesszelle (2) nach einem der Ansprüche 1-10, **dadurch gekennzeichnet, dass** ein als Temperaturfühler ausgestaltete Sensor (29) an einer Stelle angeordnet ist, wo ein Mittelwert der für die Sensoren massgebenden Temperatur herrscht.

12. Waage (1) mit einer modularen Kraftmesszelle (2) nach einem der Ansprüche 1-10.

## Claims

1. Modular force-measuring cell (2), in particular for a weighing scale, comprising a force transducer (20) equipped with sensors (28, 29) which are able to measure changes occurring in the state of the force transducer (20) as a result of a force or temperature, and also comprising a memory module (245) for storing compensation data associated with the modular force-measuring cell (2), **characterized in that** a circuit module (24) is mechanically and thermally coupled to the force transducer (20), wherein said circuit module (24) comprises the memory module (245), at least one converter circuit (243, 244) for the conversion of the analog signals delivered by the sensors (28, 29), and a connector terminal arrangement (242) through which the memory module (245) and the converter circuit (243, 244) each are connectable separately to a processor module (501).

2. Modular force-measuring cell (2) according to claim 1, **characterized in that**, in addition to the memory module, the circuit module comprises substantially only circuit components associated with analog signal processing activity that is functionally close to the sensors.

3. Modular force-measuring cell (2) according to claim 1 or 2, **characterized in that** two converter circuits (243, 244) are provided for generating digital signals which can consist of pulse-width modulated signals pwm1, pwm2, corresponding to the analog signals delivered by the sensors (28, 29), respectively corresponding to the applied force on the force transducer (20) and its temperature.

4. Modular force-measuring cell (2) according to claim 1, 2 or 3, **characterized in that** the circuit module (24) can be connected by way of a further ribbon connector (500) to a processor module (501), wherein the latter is spatially set apart from the force-measuring cell (2) to provide a good degree of thermal uncoupling between the processor module (501) and the force-measuring cell (2), said processor module (501) being operable to read the compensation data from the memory module (245) and to perform the required processing of the digital signals delivered by the at least one converter circuit (243, 244).

5. Modular force-measuring cell (2) according to one of the claims 1 to 4, **characterized in that** the circuit module (24) comprises a flexible or rigid substrate with conductive tracks, which can have the form of a printed circuit board.

6. Modular force-measuring cell (2) according to claim 5, **characterized in that** a metal element (23) is provided which is at least partially in surface contact with the substrate of the circuit module (24) and releasably connected to the force transducer (20), wherein the circuit module (24) is designed to be connected to the metal element (23).

7. Modular force-measuring cell (2) according to one of the preceding claims, **characterized in that** the force transducer (20) comprises a deformable body (207) which can be configured as a parallelogram-shaped measuring element with elastically deformable material portions carrying at least one sensor, preferably four sensors configured as strain gauges (28_{TF}, 28_{TB}, 28_{BF}, 28_{BB}) which are connected by means of at least one flexible ribbon connector (22_{T}, 22_{B}) to the circuit module (24), where the sensors are connected to form a measuring circuit, preferably a measuring bridge circuit.

8. Modular force-measuring cell (2) according to claim 7, **characterized in that** the conductive tracks of the flexible ribbon connector (22_{T}, 22_{B}) which lead to the sensors (28_{TF}, 28_{TB}, 28_{BF}, 28_{BB}) and are preferably printed on a flexible ribbon or foil material are dimensioned so that all connector leads to the terminals of the strain gauges (28_{TF}, 28_{TB}, 28_{BF}, 28_{BB}) have at least approximately equal resistance values, including cases where a connector lead consists of several sections (281_{TF}, 282_{TF}, 283_{TF}; 281_{TB}, 282_{BF}, 283_{TB}; ...).

9. Modular force-measuring cell (2) according to claim 7 or 8, **characterized in that** the sensors (28_{TF}, 28_{TB}, 28_{BF}, 28_{BB}) are connected to the circuit module (24) by means of at least two separately routed flexible ribbon connectors (22_{T}, 22_{B}).

10. Modular force-measuring cell (2) according to claim 7 or 8, **characterized in that** the conductive tracks leading to the sensors (28_{TF}, 28_{TB}, 28_{BF}, 28_{BB}) have partial sections (281_{TF}, 281_{TB}, 281_{BF}, 281_{BB}) that are used in common by two or more of the sensors (28_{TF}, 28_{TB}, 28_{BF}, 28_{BB}) for the purpose of reducing the number of connector terminals (241-1, 241-2, ...) on the circuit module (24).

11. Modular force-measuring cell (2) according to one of the claims 1-10, **characterized in that** a temperature sensor (29) is arranged at a location where the temperature level represents an average of the temperatures at the measuring bridge sensors.

12. Weighing scale (1) with a modular force-measuring cell (2) according to one of the claims 1 to 10.

## Revendications

1. Cellule dynamométrique modulaire (2), en particulier pour une balance, comprenant un capteur de force (20), qui est doté de capteurs (28, 29), qui permet de mesurer des variations d'état du capteur de force (20) provoquées par des effets de force et de température, et un module de mémoire (245), dans lequel des données de compensation appartenant à la cellule dynamométrique modulaire (2) peuvent être mémorisées, **caractérisée en ce qu'**un module de circuit (24) est couplé mécaniquement et thermiquement au capteur de force (20), qui présente le module de mémoire (245), au moins un circuit convertisseur (243, 244) servant à la conversion des signaux analogiques émis par les capteurs (28, 29) et un poste de raccordement (242), par lequel le module de mémoire (245) et le circuit convertisseur (243, 244) peuvent être reliés chacun séparément à un module de processeur (501).

2. Cellule dynamométrique modulaire (2) selon la revendication 1, **caractérisée en ce que** le module de circuit contient en plus du module de mémoire sensiblement seulement des parties de circuit pour un traitement de signal analogique proche du capteur.

3. Cellule dynamométrique modulaire (2) selon la revendication 1 ou 2, **caractérisée en ce que** deux circuits convertisseurs (243, 244) sont prévus pour l'émission de signaux pwm1, pwm2 numériques, éventuellement modulés en largeur d'impulsion, qui correspondent aux signaux analogiques émis par les capteurs (28, 29) ou à la force amenée au capteur de force (20) et sa température.

4. Cellule dynamométrique modulaire (2) selon la revendication 1, 2 ou 3, **caractérisée en ce que** le module de circuit (24) peut être relié à un module de processeur (501) décalé par rapport à la cellule dynamométrique (2) et bien dissocié thermiquement avec celle-ci, qui est approprié pour la lecture des données de compensation dans le module de mémoire (245) et pour le traitement approprié des signaux numériques émis par le au moins un circuit convertisseur (243, 244).

5. Cellule dynamométrique modulaire (2) selon l'une quelconque des revendications 1 à 4, **caractérisée en ce que** le module de circuit (24) présente un substrat flexible ou fixe, pourvu de pistes conductives, éventuellement une platine de commutation.

6. Cellule dynamométrique modulaire (2) selon la revendication 5, **caractérisée en ce qu'**il est prévu un élément métallique (23) contigu au moins partiellement au substrat du module de circuit (24), en liaison amovible avec le capteur de force (20), avec lequel le module de circuit (24) peut être relié.

7. Cellule dynamométrique modulaire (2) selon l'une quelconque des revendications précédentes, **caractérisée en ce que** le capteur de force (20) présente un corps de déformation (207) conçu éventuellement comme parallélogramme de mesure, sur les zones de déformation duquel au moins un, de préférence quatre capteurs (28_{TF}, 28_{TB}, 28_{BF}, 28_{BB}) conçus comme jauges extensométriques sont reliés au module de circuit (24) au moyen d'au moins une liaison (22_{T}, 22_{B}) flexible et de type bande et sont interconnectés à cet endroit pour former un dispositif de mesure, de préférence un pont de mesure.

8. Cellule dynamométrique modulaire (2) selon la revendication 7, **caractérisée en ce que** les dimensions des pistes conductives, imprimées de préférence sur une bande flexible ou une feuille, de la liaison (22_{T}, 22_{B}), flexible et de type bande, qui aboutissent aux capteurs (28_{TF}, 28_{TB}, 28_{BF}, 28_{BB}), sont conçues de telle sorte que toutes lignes de liaison, inclusivement les lignes de liaison composées de tronçons partiels (281_{TF}, 282_{TF}, 283_{TF} ; 281_{TB}, 282_{BF}, 283T_{B}), et allant aux branchements des capteurs (28_{TF}, 28_{TB}, 28_{BF}, 28_{BB}) présentent au moins approximativement la même valeur de résistance.

9. Cellule dynamométrique modulaire (2) selon la revendication 7 ou 8, **caractérisée en ce que** les capteurs (28_{TF}, 28_{TB}, 28_{BF}, 28_{BB}) sont reliés au module de circuit (24) au moyen d'au moins deux liaisons (22_{T}, 22_{B}) guidées séparément, flexibles et de type bande.

10. Cellule dynamométrique modulaire (2) selon la revendication 7 ou 8, **caractérisée en ce que**, pour réduire le nombre des branchements (241-1, 241-2) sur le module de circuit (24), des tronçons partiels (281_{TF}, 281_{TB} ; 281_{BF}, 281_{BB}) des pistes conductives allant aux capteurs (28_{TF}, 28_{TB}, 28_{BF}, 28_{BB}) sont utilisés ensemble par deux ou plusieurs des capteurs (28_{TF}, 28_{TB}, 28_{BF}, 28_{BB}.

11. Cellule dynamométrique modulaire (2) selon l'une quelconque des revendications 1 à 10, **caractérisée en ce qu'**un capteur (29) conçu comme sonde de température est disposé en un endroit où on a une valeur moyenne de la température déterminante pour les capteurs.

12. Balance (1) comprenant une cellule dynamométrique modulaire (2) selon l'une quelconque des revendications 1 à 10.
